# EUROPEAN PATENT APPLICATION

(11) **EP 2 117 140 A1**
(43) Date of publication of application: **11.11.2009**
(21) Application number: 08155640.9
(22) Date of filing: 05.05.2008
(51) Int. Cl.: H04B 11/00, G06T 1/00, G10L 19/00, H04K 1/02

(54) **A method of covertly transmitting information, a method of recapturing covertly transmitted information, a sonar transmitting unit, a sonar receiving unit and a computer program product for covertly transmitting information and a computer program product for recapturing covertly transmitted information**

(71) Applicant: Nederlandse Organisatie voor Toegepast- Natuurwetenschappelijk Onderzoek TNO, 2628 VK Delft (NL)
(72) Inventor: Quesson, Benoit André Jacques, 2963 AK Den Haag (NL)
(74) Representative: Hatzmann, Martin

(57) **Abstract**

The invention relates to a method of covertly transmitting information. The method comprises the step of providing biological sound data. Further, the method comprises the step of processing the biological sound data with the information to be transmitted in a correlated manner. The method also comprises the step of generating an acoustic signal from the processed biological sound data.

## Description

The invention relates to a method of covertly transmitting information.

Marine vessels, such as submarines or unmanned underwater vehicles have a need to mutually transmit and/or receive information signals in a covert way for communication purposes. Especially in a military context, it might be important that communication signals between two or more friendly platforms are not intercepted or classified as such by an enemy analyzing station since the communication signals may contain vital information regarding any presence, position and therefore safety of the transmitting and/or receiving platforms.

It is known to encrypt communication signals to counteract that hostile analyzers can retrieve the content of said signals. Further, it is known to transmit data covertly, thus rendering it difficult for the hostile analyzer to find out that information is exchanged between the friendly platforms. According to the latter approach, one commonly spreads the information over frequency and hides it as a noise-like signal

Patent publication WO 2005/013410 discloses such a spreading technique wherein biological sounds are used to mask uncorrelated spread information signals.

It is an object of the invention to provide an alternative method of covertly transmitting information. Thereto, according to the invention, the method according to the invention comprises the steps of providing biological sound data, processing the biological sound data with the information to be transmitted in a correlated manner, and generating an acoustic signal from the processed biological sound data.

By processing the biological sound data with the information to be transmitted in a correlated manner, the information is an integral part of the biological sound, but will likely not be identified as such, since any intercepted biological sound will be assumed by an intercepting platform to be generated by a non-human biological being, thereby providing covertness.

The invention also relates to a method of recapturing covertly transmitted information.

Further, the invention relates to a sonar transmitting unit.

In addition, the invention relates to a sonar receiving unit.

It is noted that the invention further relates to a computer program product.

Also, the invention relates to a computer program product for recapturing covertly transmitted information.

Other advantageous embodiments according to the invention are described in the following claims.

By way of example only, embodiments of the present invention will now be described with reference to the accompanying figures in which
Fig. 1 shows a schematic view of military marine vessels;
Fig. 2 shows a flow chart illustrating a method of covertly transmitting information according to the invention;
Fig. 3 shows a flow chart illustrating a method of recapturing the covertly transmitted information according to the invention;
Fig. 4 shows a time diagram of a generated acoustic signal;
Fig. 5 shows a schematic view of a sonar transmitting unit according to the invention; and
Fig. 6 shows a schematic view of a sonar receiving unit according to the invention.

It is noted that the figures show merely preferred embodiments according to the invention. In the figures, the same reference numbers refer to equal or corresponding parts.

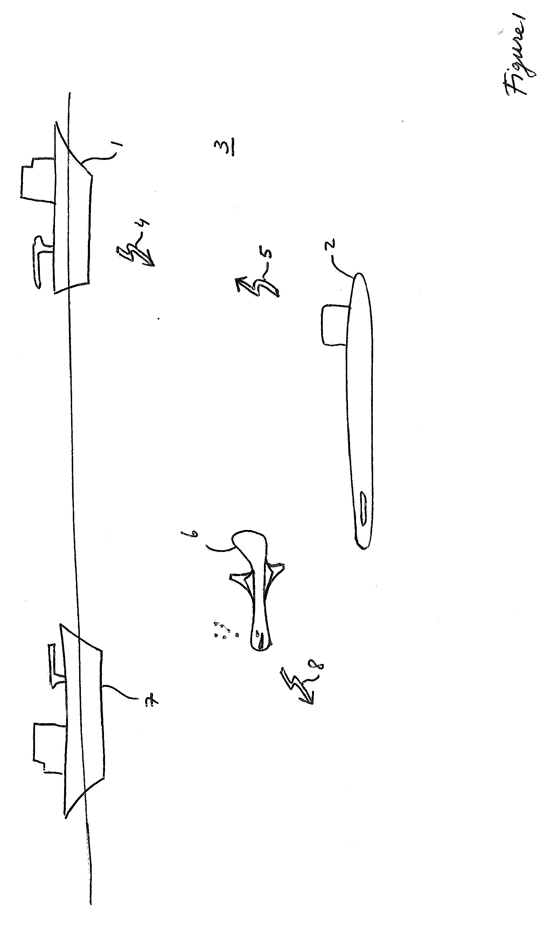

Figure 1 shows a schematic view of military marine vessels. A first marine surface vessel 1 is communicating with a friendly submarine vessel 2 on sea 3 via a transmitted signal 4 and a received signal 5. Further, marine mammals, such as whales 6 and dolphins swim in the sea 3 and produce from time to time biological acoustic signals 8. On the sea, also a hostile marine vessel 7 is present. The hostile vessel 7 comprises a receiving platform intended to intercept any communication signal between the two friendly vessels 1, 2. In order to counteract that the hostile vessel 7 receives information from the communication signals transmitted and received between the friendly vessels 1, 2, a method of covertly transmitting information according to the invention is used. Similarly, a method of recapturing the covertly transmitted information is employed.

It is noted that Figure 1 merely shows an exemplary situation wherein the method according to the invention can be employed. As an example, only surface vessels or only submarine vessels can be present. Also unmanned underwater vehicles (UUV) can be present in the sea 3.

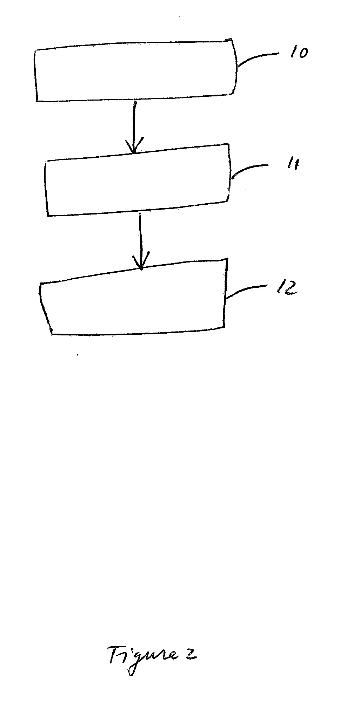

Figure 2 shows a flow chart illustrating a method of covertly transmitting information according to the invention. In a first step 10, biological sound data is provided. Optionally, the biological sound data is generated synthetically. However, the biological sound data can also be provided otherwise, e.g. by recovering natural biological sounds that have been recorded. In a second step 11, the provided biological sound data is processed with information to be transmitted in a correlated manner. By integrating the information in a correlated manner, the natural sounding acoustic signal is assumed to be classified by the hostile vessel 7 as a non-suspicious signal, thereby providing a covert characteristic of the signal to be transmitted. In a third step 12, an acoustic signal is generated from the processed acoustic signal. The acoustic signal is generated below the water surface so that an underwater communication signal is obtained.

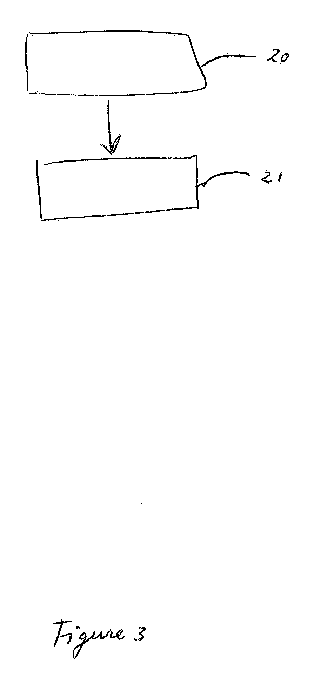

Further, Figure 3 shows a flow chart illustrating a method of recapturing the covertly transmitted information according to the invention. In a first step 20, an acoustic signal is received. Further, in a second step 21, the received acoustic signal is processed for retrieving information that has been processed with biological sound data in a correlated manner.

Preferably, the biological sound data stem from mammals living in sea, such as singing whales and chattering dolphins. However, also other biological sound data can be used, such as the snapping sound of shrimps. In a preferred embodiment according to the invention, the above mentioned mammals occur in the region where the acoustic signal is generated, thereby rendering the transmitted acoustic signal even less suspicious for a hostile listener. Since whales live in all oceans of the world, the use of sound data stemming from whales is advantageously for worldwide application.

In a specific embodiment according to the invention, cetacean sound data are used as a basis signal to be processed with information to be transmitted. The natural cetacean sound is characterized by a click signal and a whistle signal. A click signal is a short temporal pulse having a broad spectrum. The duration of such a click signal is typically circa 1 or 2 ms. A whistle signal is a singing, whistling sound.

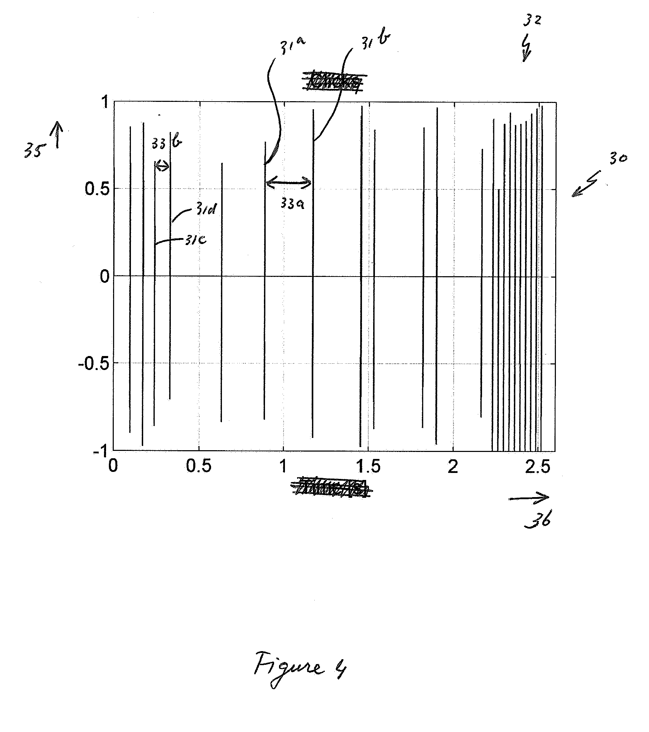

Figure 4 shows an exemplary time diagram of a generated acoustic signal 30 as a normalized amplitude 35 comprising a number of separate click signals 31a, 31b, 31c, 31d and a sweep signal 32 as a function of a time parameter 36 [s]. In the generated acoustic signal 30, information is processed in a correlated manner in the cetacean sound data by encoding a time period 33a, 33b between the click signals 31a, 31b, 31c, 31d. As an example, a relatively short time period 33b represents a binary zero while a relatively long time period 33a represents a binary one. By employing such an exemplary encoding scheme, binary information can be integrated with the biological sound data. The click signals can be generated artificially. Such an artificial click signal can for instance be generated as a short sinusoid or a linear frequency modulated (LFM) pulse having a specific common central frequency and a random phase.

In using the above described technique, it is exploited that many cetecean sounds contain series of clicks ended by a sweep. By replacing any click sequence in a biological signal by an artificial click sequence comprising short pulses with a specific common central frequency but with a random phase and with its duration fixed within certain boundaries, information can be encoded in a correlated manner by setting the time periods 33a, 33b between subsequent clicks 31a, 31b, 31c, 31d such that an individual time period corresponds to a particular symbol. By choosing a relatively large temporal difference between the set time periods 33a, 33b, a robust scheme is obtained, suitable for underwater communication, having relaxed tolerances. It is noted that, as an alternative to artificially generated clicks, natural clicks can be used in the acoustic signal to be transmitted. It is further noted that also other encoding schemes can be employed, e.g. by using three symbols each corresponding to a specific time period.

In order to make the artificial clicks sound more biological, a sweep is added to the end of such an artificial click sequence. By terminating a multiple number of click sounds by sweep having a series of swiftly succeeding clicks having an increasing central frequency, a natural appearing acoustic signal is obtained, thereby further hiding the information. In principle, however, also a multiple number of artificial click sounds can be generated without adding a sweep.

According to the invention, also other encoding schemes, known as steganography methods, can be applied to process the biological sound data with information to be transmitted in a correlated manner. As such, the processing step 11 might comprise inserting low-power tones at one or a multiple number of selected frequency pairs having encoded relative magnitudes, known as tone insertion, and/or reassigning the encoded sound's phases at selected frequency pairs, known as phase coding. As such, the process of tone insertion or phase encoding work, the difference in amplitude or phase, respectively, between two selected frequencies or a multiple number of frequency pairs is checked. Further, other modulation techniques can be applied to biological sound data serving as a basic, carrier signal. As an example, such steganography methods can be applied to the cetecean whistle sound.

In using the tone-insertion technique, artificial tones are inserted at specific frequencies *f*₀ and *f*₁ with a power comparable to or less than the original signal. The power of the tones differs by a given factor. If the tone at *f*₀ is the largest, then, in a specific embodiment, a '0' is encoded. If it is the other way around, then a '1' is encoded. The time series are cut into data segments, and for each segment one bit is encoded as described. This technique might require some tuning of tone amplitudes and their position in the spectrogram (frequencies) to make the tone insertion sufficiently covert. In order to decrease the sensitivity of the encoded information to residual Doppler shift, the bandwidth of the tones can be increased. As a default value, the bandwidth of the tone can be chosen to be circa 10 Hz.

Phase coding is very similar to the tone-insertion technique, but instead of the amplitude it is the (relative) phase of the tones that is changed. Changing the phase is less conspicuous than changing the amplitude. Examination of various music and speech spectrograms indicates an apparent randomness of phase, which presents an opportunity to replace the random phase in the original sound file with any pseudo-random sequence in which one may embed hidden data.

A process of fitting the frequencies to mammal whistles in the actual carrier signal where the audio energy is concentrated makes the scheme more robust against noise. Robustness is also increased by using larger segments, but this decreases the data rate. Next to using two fixed frequencies, the frequency pairs can also be selected for each segment separately according to a secret key (pseudo-random sequence) only known by a rightful sender and receiver, providing a basic form of encryption. Another possibility is to take harmonic frequencies, thereby exploiting the spectral properties of some marine mammal sounds. The tone insertion and phase coding technique can even be repeated in higher harmonics, increasing robustness by redundancy.

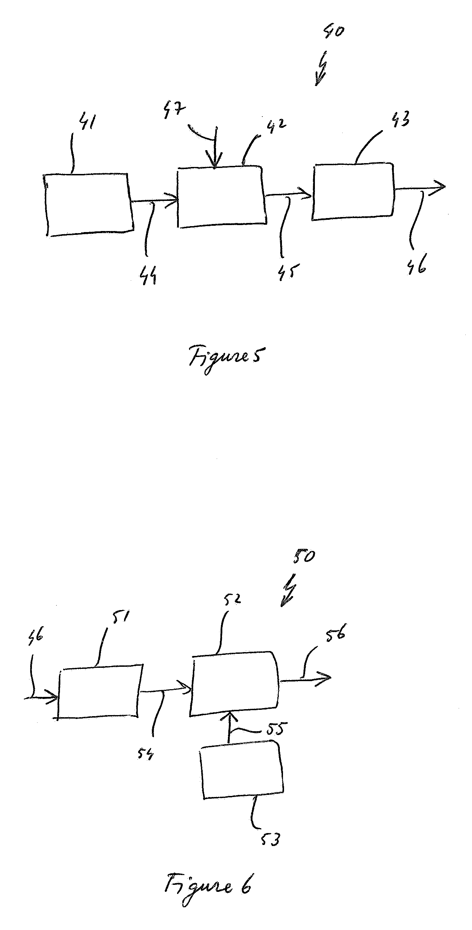

Figure 5 shows a schematic view of a sonar transmitting unit 40 according to the invention. The transmitting unit 40 is provided with a biological sound data generator 41 for generating biological sound data 44. The sound data generator 41 might comprise a generator for synthetically generating biological sound data. Alternatively, the sound data generator 41 is provided with a memory for retrieving earlier recorded biological data. Further, the unit 40 comprises a processor 42 for processing the generated biological sound data 44 with information 47 to be transmitted in a correlated manner, thus providing processed data 45. The processor 42 is arranged for performing one or more of the techniques described above, such as the click time period encoding approach, or further steganography methods. In addition, the unit comprises a projector 43, also known as a acoustic source, for generating an acoustic signal 46 from the processed biological sound data 45.

Further, Figure 6 shows a schematic view of a sonar receiving unit 50 according to the invention. The sonar receiving unit 50 comprises an acoustic receiver 51 for receiving the transmitted acoustic signal 46. Further, the sonar receiving unit 50 comprises a processor 52 for processing the received acoustic signal 54 for retrieving information 56 that has been processed with biological sound data in a correlated manner. Thereto, the processor 52 is arranged for decoding the received acoustic signal 54.The sonar receiving unit 50 also comprises a memory 53 for storing and retrieving any data 55 relating to the employed processing technique, such as an encoding scheme parameter list.

It is noted that the processing steps mentioned above can be performed either by dedicated hardware or by standard hardware that is loaded with software suitable for performing the data processing tasks.

The invention is not restricted to the embodiments described herein. It will be understood that many variants are possible.

Instead of generating an underwater signal, the method of covertly transmitting information can, in principle, also be applied to generate acoustic signals in the air, preferably using biological sounds of animals living in the local region where the transmitting and recapturing method is applied. Further, biological sound data stemming from animals living in the air or on the land can be applied for underwater communication. As an example, clicks from birds can form biological sound data to be processed and generated as an acoustic signal.

Other such variants will be obvious for the person skilled in the art and are considered to lie within the scope of the invention as formulated in the following claims.

## Claims

1. A method of covertly transmitting information, comprising the steps of:
- providing biological sound data;
- processing the biological sound data with the information to be transmitted in a correlated manner; and
- generating an acoustic signal from the processed biological sound data.

2. A method according to claim 1, wherein the acoustic signal is transmitted as an underwater signal.

3. A method according to claim 1 or 2, wherein the biological sound data is synthetically generated.

4. A method according to any of the previous claims, wherein the biological sound data stems from mammals.

5. A method according to any of the previous claims, wherein the mammals naturally occur in the region where the acoustic signal is generated.

6. A method according to any of the previous claims, wherein the processing step comprises encoding a time period between click sounds stemming from a whale or dolphin.

7. A method according to any of the previous claims, wherein a multiple number of click sounds is terminated by a series of swiftly succeeding clicks having an increasing central frequency.

8. A method according to the any of the previous claims, wherein the processing step comprises inserting low-power tones at one or a multiple number of frequencies having encoded relative magnitudes and/or reassigning an encoded phase of sounds having a selected frequency, preferably in whistle sound data.

9. A method of recapturing covertly transmitted information, comprising the steps of:
- receiving an acoustic signal;
- processing the received acoustic signal for retrieving information that has been processed with biological sound data in a correlated manner.

10. A sonar transmitting unit, comprising:
- a biological sound data generator;
- a processor for processing biological sound data with information to be transmitted in a correlated manner;
- a projector for generating an acoustic signal from the processed biological sound data.

11. A sonar receiving unit, comprising:
- an acoustic receiver;
- a processor for processing the received acoustic signal for retrieving information that has been processed with biological sound data in a correlated manner.

12. A computer program product for covertly transmitting information, the computer program product comprising computer readable code for causing a processor to perform the step of processing biological sound data with information to be transmitted in a correlated manner.

13. A computer program product for recapturing covertly transmitted information, the computer program product comprising computer readable code for causing a processor to perform the step of processing a received acoustic signal for retrieving information that has been processed with biological sound data in a correlated manner.
